# EUROPÄISCHE PATENTSCHRIFT

(11) **EP 1 222 371 B1**
(45) Veröffentlichungstag und Bekanntmachung des Hinweises auf die Patenterteilung: **01.12.2004**
(21) Anmeldenummer: 00978959.5
(22) Anmeldetag: 29.09.2000
(51) Int. Cl.: F01N 3/20

(54) **VORRICHTUNG ZUR DOSIERUNG EINES REDUKTIONSMITTELS**
DEVICE FOR DOSING A REDUCING AGENT
DISPOSITIF POUR LE DOSAGE D'UN AGENT DE REDUCTION

(30) Priorität: 30.09.1999 DE 19946903
(43) Veröffentlichungstag der Anmeldung: 17.07.2002
(73) Patentinhaber: ROBERT BOSCH GMBH, 70442 Stuttgart (DE)
(72) Erfinder: FRISCH, Walter, 71254 Hirschlanden (DE); HUBER, Sven, 83404 Ainring/Mitterfelden (DE); KRAH, Jürgen, A-5101 Bergheim (AT); MAYER, Hanspeter, A-5421 Adnet (AT); OFFENHUBER, Michael, A-5421 Adnet (AT); SACHSENHOFER, Robert, A-5411 Oberalm (AT); WEISS, Roland, A-5424 Vigaun (AT); FOETSCHL, Markus, A-5580 Unternberg (AT); SCHWARZ, Roland, A-5020 Salzburg (AT)
(86) Internationale Anmeldenummer: PCT/DE2000/003407
(87) Internationale Veröffentlichungsnummer: WO 2001/023716

(56) Entgegenhaltungen:
- WO-A-97/07876
- DE-A- 4 221 363
- DE-A- 19 726 392
- US-A- 5 884 475

## Beschreibung

Die vorliegende Erfindung betrifft ein Verfahren zur Dosierung eines Reduktionsmittels, insbesondere eines Harnstoffs bzw. einer Harnstoff-Wasser-Lösung, im Rahmen einer katalytischen Abgasnachbehandlung nach dem Oberbegriff des Patentanspruchs 1.

Als Folge der in den letzten Jahren stets niedriger anzusetzenden Schadstoffgrenzwerte sind zahlreiche Vorrichtungen und Verfahren zur Nachbehandlung von Abgasen von Brennkraftmaschinen entwickelt worden. Beispielsweise mittels Katalysatorsystemen, welche Harnstoff und/oder Ammoniak als Reduktionsmittel zur NOₓ-Konvertierung verwenden, sind effiziente Abgasnachbehandlungssysteme zur Verfügung gestellt.

Um eine Verminderung von NOₓ-Bestandteilen in Abgasen zu erzielen, wurden insbesondere für Dieselmotoren Reduktionskatalysatoren entwickelt, die üblicherweise in sogenannte SCR-Katalysatoren (engl. Selective Catalytic Reduction) mit Harnstoffdosiersystem und Speicherkatalysatoren unterteilt werden. Die sogenannten SCR-Katalysatoren werden mittels einer Harnstoff- und/oder Ammoniakreduktionsmittelzufuhr regeneriert, während die sogenannten Speicherkatalysatoren mit Kohlenwasserstoffen des mitgeführten Brennkraftmaschinen-Brennstoffs in sogenannten Abgasfettphasen regeneriert werden.

Aus der EP-A-0381236 ist ein System bekannt, welches zum Entfernen von Stickoxiden in Abgasen aus einem Dieselmotor Ammoniak als Reduktionsmittel zudosiert. Bei diesem System ist ferner ein Turbolader vorgesehen, welcher den Druck des Abgases senkt. Eine verwendete Harnstoff-Wasser-Lösung wird mittels Druckluft zudosiert.

Aus der DE-A-44 41 261 ist eine Einrichtung zum Nachbehandeln von Abgasen einer Brennkraftmaschine bekannt, bei welcher die Leistung des Katalysators über eine Dosiereinrichtung verbessert werden soll. Die Dosiereinrichtung ist als Kleinstmengendosier-Verdrängerpumpe ausgebildet, die auf einem zylindrischen Rotationskörper einen Gewindegang in der Form einer Nut aufweist, wobei zur Änderung der Förderleistung der Rotationskörper mit variabler Drehzahl angetrieben wird. Die Zugabe des Reduktionsmittels in das Abgassystem erfolgt vorzugsweise kennfeldabhängig, d. h. in Abhängigkeit von Menge und/oder Zusammensetzung des Abgases.

Bevorzugt erfolgt die Zudosierung des Reduktionsmittels zu dem nachzubehandelnden Abgas als Aerosol, wobei zur Bildung eines derartigen Aerosols das Reduktionsmittel in einem Mischraum einer Mischkammer mit Druckluft beaufschlagt wird. Ein derartiges System ist beispielsweise aus der DE 42 30 056 A1 bekannt. Die Druckluft wird hierbei der Mischkammer über eine Druckluftleitung zugeführt. Eine Druckregelung innerhalb der Druckluftleitung erfolgt herkömmlicherweise unter Verwendung einer Anzahl von Druckreduzierventilen und eines 2/2-Wegeventils. Derartige Druckregelungssysteme sind lediglich in der Lage, einen voreinstellbaren Betriebspunkt einzustellen. Mit einem derart voreingestellten Betriebsdruck ist jedoch eine Variation des Aerosols nur über eine Änderung des Reduktionsmittelanteils erreichbar (Konzentrationsänderung). Eine Variation der Tropfen- bzw. Partikelgröße des Aerosols über eine Änderung des Druckes der zugeführten Druckluft ist nicht möglich. Um eine derartige Druckänderung zu realisieren, wäre es möglich, die Druckluftleitung mit einem gesteuerten Druckregler zu beaufschlagen. Ein derartiger Druckregler erfordert jedoch eine zusätzliche Ansteuerung sowie aufwendige Umbauten an einem dem System zugeordneten Steuergerät bzw. einem zwischen dem Steuergerät und dem System vorgesehenen Kabelbaum.

Aufgabe der Erfindung ist eine möglichst einfache und unaufwendige Luftdruckregelung in einem Reduktionsmitteldosiersystem.

Diese Aufgabe wird gelöst durch ein Verfahren mit den Merkmalen des Patentanspruchs 1.

Erfindungsgemäß ist nun die Möglichkeit einer einfachen und unaufwendigen Regelung des Luftdrucks in der Druckmittelleitung eines Reduktionsmittel-Dosiersystems zur Verfügung gestellt. Es sind hierdurch beispielsweise gegenüber herkömmlichen Lösungen in einfacher Weise Aerosole mit unterschiedlichen Eigenschaften herstellbar. Auf herkömmlicherweise verwendete Druckreduzierventile bzw. zusätzliche Druckregler im Luftkreislauf bzw. der Druckleitung kann verzichtet werden. Bei erfindungsgemäßer Verwendung eines getaktet ansteuerbaren Ventils ist eine stufenlose Druckregelung, sowie eine Abschaltung des Luftkreislaufs realisierbar. Dadurch wird es ferner möglich, ein dreidimensionales Einspritzkennfeld mit Luftdruck als Parameter vorzugeben, wodurch eine Verbesserung der Systemverfügbarkeit und des Systemwirkungsgrades erzielbar ist.

Die erfindungsgemäße Steuerung bzw. Regelung mittels eines getaktet ansteuerbaren Ventils ermöglicht ein exaktes Dosieren und ein zeitweises Erhöhen oder Erniedrigen des benötigten Luftdrucks. Dadurch wird die Gemischbildung (Aerosolbildung) verbessert und eine durchzuführende NOₓ-Konvertierung kann insbesondere im Grenzwertbereich des Einspritzranges des Reduktionsmittels verbessert werden.

Vorteilhafte Ausgestaltungen des erfindungsgemäßen Verfahrens sind Gegenstand der Unteransprüche.

Gemäß einer besonders bevorzugten Ausführungsform des erfindungsgemäßen Verfahrens ist das getaktet ansteuerbare Ventil als 2/2-Wegeventil ausgeführt. Derartige 2/2-Wegeventile sind in preiswerter Weise verfügbar und erweisen sich in der Praxis als robust und zuverlässig. Mittels eines derartigen Ventils ist auch beispielsweise eine Booster-Funktion (kurzzeitiges Anheben des Luftdrucks) realisierbar, wobei mit einer derartigen Funktion Leitungen und Bohrungen im Reduktionsmittel-Dosiersystem durch temporären Luftanstieg im System freigeblasen werden können.

Zweckmäßigerweise handelt es sich bei dem verwendeten Reduktionsmittel um Harnstoff bzw. eine Harnstoff-Wasser-Lösung.

Die Erfindung wird nun anhand der beigefügten Zeichnung weiter erläutert. In dieser zeigt
- Figur 1: eine schematische blockschaltbildartige Ansicht eines herkömmlicherweise verwendeten Systems zur Luftdruckeinstellung in einer Luftdruckleitung,
- Figur 2: eine bevorzugte Ausführungsform der erfindungsgemäßen Vorrichtung, ebenfalls in schematischer blockschaltbildartiger Ansicht, und
- Figur 3: ein Schaubild zur Darstellung der erfindungsgemäß in Abhängigkeit von einem Tastverhältnis eines getaktet ansteuerbaren Ventils einstellbaren Drücke.

Die Funktionsweise sowie der Aufbau eines Reduktionsmittel-Dosiersystems ist an sich bekannt und bedarf daher keiner ausführlichen Erläuterung. Es sei nur kurz festgestellt, daß ein Reduktionsmittel, beispielsweise eine Harnstoff-Wasser-Lösung, einer Mischkammer 10 zugeführt wird, in welcher unter Beaufschlagung des Reduktionsmittels mit Druckluft ein Aerosol erzeugt wird. Die Zufuhr der Druckluft ist Gegenstand der vorliegenden Erfindung, so daß sich die Darstellung des Reduktionsmittel-Dosiersystems auf diesen Aspekt beschränkt.

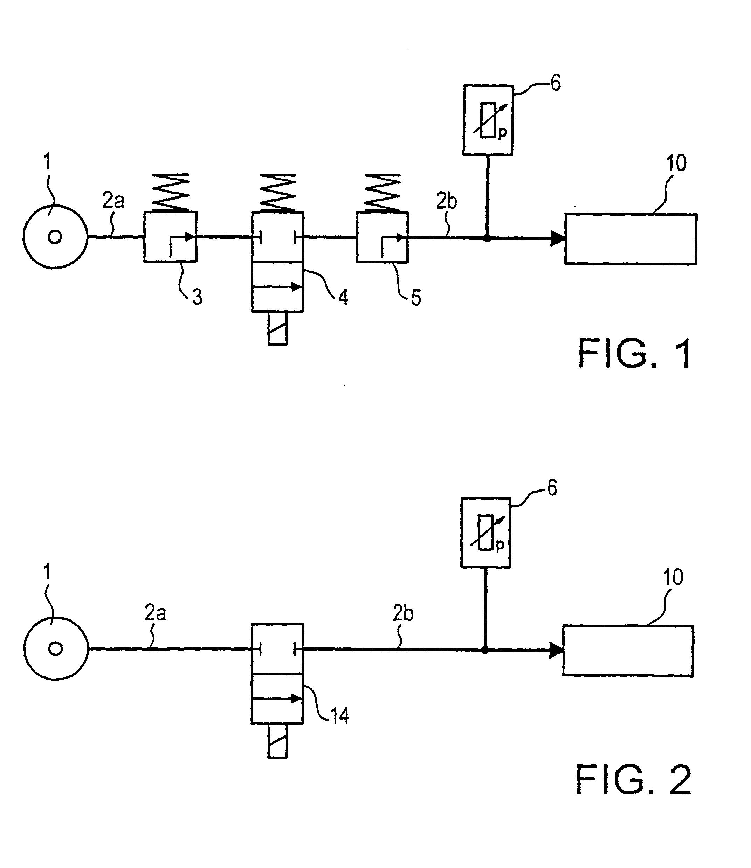

Unter Bezugnahme auf Figur 1 wird zunächst der Stand der Technik beschrieben, auf welchem die vorliegende Erfindung aufbaut: Mit 1 ist ein Druckluftbehälter bezeichnet, aus welchem Druckluft über eine Druckluftleitung 2a über ein erstes Druckreduzierventil 3, welches den Druck beispielsweise auf 7 bar reduziert, ein 2/2-Wegeventil 4, ein weiteres Druckreduzierventil 5, durch welches der Luftdruck beispielsweise auf 1 bar reduzierbar ist, und eine weitere Druckluftleitung 2b in die Mischkammer 10 einbringbar ist. Der in der Druckleitung 2b herrschende Druck wird mittels eines Drucksensors 6 erfaßt, welcher den erfaßten Druckwert beispielsweise einem (nicht dargestellten) Steuergerät zuführt.

Mittels der in Figur 1 dargestellten Anordnung ist lediglich ein durch die Druckreduzierventile 3, 5 bedingter, voreingestellter Luftdruck einstellbar. Das 2/2-Wegeventil 4 dient lediglich zur Unterbrechnung (dargestellter Zustand) sowie zur Gestattung der Luftzufuhr durch die Druckluftleitung 2a bzw. 2b.

In Figur 2 ist eine bevorzugte Ausführungsform der Erfinding dargestellt. Gleiche oder ähnliche Bauteile sind mit gleichen Bezugszeichen versehen wie in Figur 1. Es ist wiederum ein Druckluftbehälter 1 vorgesehen, aus welchem Druckluft über eine Druckluftleitung 2a, 2b in eine Mischkammer 10 einbringbar ist. Man erkennt, daß in der Druckluftleitung 2a, 2b zur Drucksteuerung bzw. -einstellung lediglich ein 2/2-Wegeventil 14 vorgesehen ist. Dieses Ventil 14 ist erfindungsgemäß getaktet ansteuerbar.

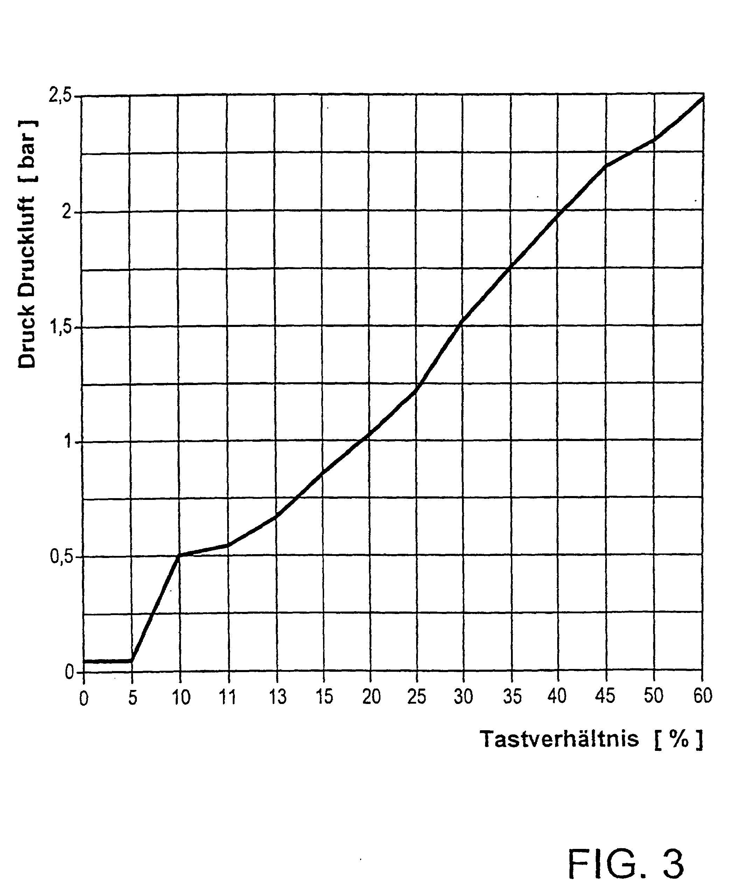

In Figur 3 ist ein unter Verwendung eines derartigen getaktet ansteuerbaren 2/2-Wegeventils 14 in der Leitung 2b einstellbarer Druck dargestellt. In der Figur 3 sind beispielhaft Tastverhältnisse von 0 bis 60 % dargestellt. Man erkennt, daß durch entsprechende Einstellung des Tastverhältnisses Drücke zwischen 0 und 2,5 bar einstellbar sind. Bei höheren Tastverhältnissen sind selbstverständlich auch höhere Drücke einstellbar. Es wurde hier beispielhaft davon ausgegangen, daß ein Eingangsdruck, d. h. der Druck in dem Druckluftbehälter 1 bzw. der Leitung 2b, etwa 6 bar beträgt. Es ist auch möglich, in dem Druckluftbehälter 1 höhere Drücke vorzusehen, und zwischen Druckluftbehälter 1 und Ventil 14 ein entsprechendes (hier nicht dargestelltes) Druckreduzierventil anzuordnen.

## Patentansprüche

1. Verfahren zur Dosierung eines im Rahmen einer katalytischen Abgasnachbehandlung verwendeten Reduktionsmittels, unter Verwendung von Mitteln (10) zur Beaufschlagung des Reduktionsmittels mit Druckluft zur Bildung eines Reduktionsmittel-Aerosols, bei dem die Druckluft über eine Druckluftleitung (2a, 2b) dem Reduktionsmittel zugeführt wird, **dadurch gekennzeichnet, dass** ein in der Druckluftleitung vorgesehenes Ventil (14) getaktet angesteuert wird und dass ein Tastverhältnis des Ventils entsprechend eines einzuregelnden bzw. einzustellenden Drucks in der Druckluftleitung (2) eingestellt wird.

2. Verfahren nach Anspruch 1, **dadurch gekennzeichnet, dass** als Ventil (14) ein 2/2-Wegeventil verwendet wird.

3. Verfahren nach einem der Ansprüche 1 oder 2, **dadurch gekennzeichnet, dass** als Reduktionsmittel Harnstoff bzw. eine Harnstoff-Wasser-Lösung verwendet wird.

## Claims

1. Method for metering a reducing agent used as part of a catalytic exhaust-gas aftertreatment, using means (10) for applying compressed air to the reducing agent in order to form a reducing agent aerosol, in which the compressed air is fed to the reducing agent via a compressed-air line (2a, 2b), **characterized in that** the actuation of a valve (14) provided in the compressed-air line is clocked, and **in that** a duty ratio of the valve is set as a function of a pressure which is to be controlled or established in the compressed-air line (2).

2. Method according to Claim 1, **characterized in that** the valve (14) used is a 2/2-way valve.

3. Method according to either of Claims 1 and 2, **characterized in that** the reducing agent used is urea or a urea-water solution.

## Revendications

1. Procédé de dosage d'un agent réducteur utilisé dans le cadre d'un traitement aval catalytique des gaz d'échappement, utilisant des moyens (10) pour soumettre l'agent réducteur à de l'air comprimé pour former un aérosol d'agents réducteurs, selon lequel, l'air comprimé est fourni à l'agent réducteur par l'intermédiaire d'une conduite d'air comprimé (2a, 2b),
**caractérisé en ce qu'**
on commande de manière cadencée une vanne (14) équipant la conduite d'alimentation en air comprimé ; et
on règle le rapport de travail de la vanne en fonction de la pression à régler ou à asservir dans la conduite d'alimentation en air comprimé (2).

2. Procédé selon la revendication 1,
**caractérisé en ce que**
la vanne (14) est un distributeur à 2/2 voies.

3. Procédé selon l'une des revendications 1 ou 2,
**caractérisé en ce que**
l'agent réducteur est de l'urée ou une solution eau - urée.
